# EUROPEAN PATENT APPLICATION

(11) **EP 1 858 210 A1**
(43) Date of publication of application: **21.11.2007**
(21) Application number: 06405216.0
(22) Date of filing: 19.05.2006
(51) Int. Cl.: H04L 12/56

(54) **Method and system for adaptive communication service access**

(71) Applicant: Whitestein Information Technology Group AG, 6300 Zug (CH)
(72) Inventor: Calisti, Monique, 8044 Gockhausen (CH); Lozza, Thomas, 8004 Zürich (CH)
(74) Representative: Frei Patent Attorneys

(57) **Abstract**

A wireless communication system comprises an end user device (604) and a plurality of access nodes (607, 608). For adaptive communication service access, the end user device is associated with an End User Module (601) and the access nodes are associated with Access Manager Modules (609, 611), and for the selecting one of a plurality of communication channels, a negotiation procedure is performed, comprising the steps of:
• either the End User Module (601) sending (624, 625) a Call For Proposal to one or several Access Manager Modules;
• or an Access Manager Module (609, 611) sending a connectivity offer to an End User Module (601);
• the End User Module (601) and at least one Access Manager Module (609, 611) negotiating the characteristics of a connection by iteratively sending each other messages (626, 627, 628, 629).

## Description

### FIELD OF THE INVENTION

The invention relates to communication networks, and in particular to a system and method that supports dynamic coordination between a number of end user devices, EUDs, with a set of network access nodes, ANs, in order to enable adaptive access to communication services. It relates to a method and system for adaptive communication service access as described in the preamble of the corresponding independent claims.

### BACKGROUND OF THE INVENTION

During recent years, there has been significant diffusion of wireline and wireless technologies to the point where many countries are now equipped with fixed line broadband access (ADSL, cable modem, etc.) and networks of antennas providing wireless network connectivity in often heterogeneous multi-access domains (GSM/GPRS, EDGE, UMTS, WiFi, etc.). The resulting network convergence, as anticipated in early 3G specifications but only substantiated in the latest 3G releases, necessitates a new approach to network management that can lower maintenance costs while enabling the provisioning of value-added services that can be commonly deployed over diverse network technologies. A basis is the use of the IP protocol as a common means to route data packets across heterogeneous network infrastructures. Service access management addresses the issue of selecting one of several available communication channels taking into account a variety of criteria. Problems associated with service access management are:
- The fast and appropriate adjustment of the relevant connectivity parameters to a continuously changing networking environment.
- The assurance of sufficient service quality and reliability, whose perception can vary from one person to another and thus needs to be addressed individually.
- In balance with the aforementioned points, the optimisation of resource usage.

US2004131078 focuses on a method and associated apparatus (end user device in our terminology) for establishing and managing voice and data connections with various networks supported by the device. The logic and required hardware to do so is embedded in a so called Connection Manager. US2004131078 refers to several possible embodiments of the connection manager including a variety of devices and possible network access technologies. The connection manager hides low-level technical details (including adapter interfaces, protocol stacks and/or networks) to high level applications allowing concurrent connections across heterogeneous networks. The key idea is that connection set-up, but also management, is done according to a set of optimisation criteria that include cost, bandwidth, latency, exclusiveness, time period/connection duration, priority/quality of service. US2004131078 does not disclose a provider counterpart to mediate client choices. Moreover, neither security requirements of the applications nor device characteristics are taken into account for the connection manager optimization decisions. Additionally, seamless connectivity, e.g. through Mobile IP, is not considered.

US2005138178 focuses on various embodiments of the so-called wireless mobility manager and its method of operation that aims at automatic wireless connection set-up and management of a wireless station (end user device). The principal idea is to enable automatic detection of different wireless networks and different access points within a wireless network so that seamless handover can be performed and trigger the handover based on several criteria.

WO 0174096 A2 describes a so called "wireless local loop system", i.e. a system to manage radio data transmission capacity and network resources shared by a set of subscriber stations, This is done by taking into account a variety of parameters characterizing the connection to be created and consequent required network resources. There is an interaction between subscribers and network management in order to allocate capacity for given connections requests. This interaction takes the following approximate form:
1. Receiving a request from a client to create a connection.
2. Reviewing each received request and information representing the present allocation of said radio bandwidth to clients.
3. (If appropriate) Allocation of bandwidth and/or network resources and establishing a connection to a client
However, this mechanism is fairly simple and inflexible: no negotiation takes place, and there is no co-ordination between different base stations that would allow for load balancing. Only the connection with a single base station is addressed.

The article "Vertical Handover Support in Coordinated Heterogeneous Radio Access Networks", R. Ferrus, A. Gelonch, O. Sallent, J. Perez-Romero, 14th IST Mobile & Wireless Communications Summit, Dresden, June 2005, discloses support for vertical handover in Radio Access Networks with selection criteria predominantly based on Quality of Service. A vertical handover decision module is described in terms of its placement and operation within a concrete provider system. This decision module can communicate with various network devices, including client devices, to determine radio access network selection based on QoS parameters. Some degree of negotiation takes place, but only between entities within the network and excluding the clients. The client devices remain passive.

The wireless mobility manager is able to monitor the network environment a wireless station (or end user device) is embedded in, automatically detects levels of signal quality offered by various access points, and therefore seamlessly and securely handover a connection to an alternative access point according to a variety of criteria that include required Quality of Service (QoS) level on the application side.

The module WMM (on the user device) can perform QoS/load balance when selecting the Access Point (AP) to handover to. It seems that some information is collected on the client side from the various APs so that ultimately the load balancing is performed by the WMM on the user device. The logic on each user device takes decisions about which access node to connect to based on information retrieved by the access nodes it can connect to, related to the radio signal they broadcast.

However, no information exchange and correlation between client devices and access nodes, as well as between access nodes, so that the optimisation is performed taking into account information from more than one access node, even of different technologies. The logic in US2005138178 is all implemented in the client side, and there is no provider counter-part to mediate client choices. Device characteristics are not taken into account for the connection manager optimisation decisions.

EP1583284 proposes a method and a system to perform load balancing in a wireless access node, which serves multiple devices through multiple data channels. The goal of the invention is to improve the performance of the access node and the QoS offered to the client's devices.

Congestion on a data channel is detected by measuring the current bandwidth, the amount of traffic, and the number of packets pending in the queues waiting to be dispatched. An algorithm considers the QoS provided, the new load balancing scenario, and the radio signal strength if a new channel is selected (for more detail see flow chart diagram on the front page). The optimisation does not take into account multiple channel swapping.

The method proposes the following sequence of actions to be taken: 1. Calculate the load on every channel at an access node. 2. Determine whether the access node is congested. 3. If so, selects a link to be handed off. 4. Determine an alternative access node that satisfies the QoS requirements of the link in question (plus provides sufficient signal strength). 5. Shift the link to the new access node.

EP1583284 considers only a single access node and there is no interaction or coordination logic that considers participation of, or includes information about, multiple access nodes. Moreover, EP1583284 does not take client's preferences explicitly into account, or information that can be measured on the client's device.

WO 01/74096 discloses a system for providing wireless local loop telecommunications services. The allocation of radio data transmission capacity and network resources shared by a set of subscriber stations takes into account a variety of parameters characterising the connection to be created and required network resources and availability. There is a Network Utilization Manager (NUM) in the base station, and a plurality of Subscriber Utilization Client (SUC) in the various subscriber stations. The interaction between Subscriber Utilization Clients and Network Utilization Managers in order to allocate capacity for given connections requests takes the following approximate form:
1. Receiving a request from a client to create a connection, or a particular type of connection having certain requirements, between a base station and the client.
2. Reviewing each received request and information representing the present allocation of said radio bandwidth to clients to determine whether to allocate additional allocation.
3. Allocation of bandwidth and/or network resources and establishing a connection to a client.

However, there is no dynamic negotiation between Network Utilization Manager and Subscriber Utilization Clients, and there is very little proactive behaviour by the Network Utilization Manager. The interaction between Network Utilization Manager and Subscriber Utilization Clients is relatively simplistic and does not appear to include any aspect of negotiation.

The paper by M. Calisti, T. Lozza, D. Greenwood: An Agent-Based Middleware for Adaptive Roaming in Wireless Networks. Presented at the AAMAS 2004 workshop on Agents for Ubiquitous Computing; 20 July 2004; New York, USA, discloses an agent based system for service access management. The possibility to use negotiation for co-ordinating self-motivated and/or cooperative agents, in particular Device User Agents and Serve Access Managers is mentioned, but is not elaborated on.

### DESCRIPTION OF THE INVENTION

It is therefore an object of the invention to create a method and system for adaptive communication service access of the type mentioned initially, which overcomes the disadvantages mentioned above. These objects are achieved by a method and system for adaptive communication service access according to the corresponding independent claims.

The method for adaptive communication service access is implemented in a wireless communication system, the communication system comprising at least one end user device the end user device being configured to communicate by means of the wireless communication system with at least one of a plurality of access nodes. The end user device is associated with an End User Module, the End User Module being assigned to the end user device and configured to manage the end user device's connection to the wireless communication system, and in that access nodes are associated with Access Manager Modules, each Access Manager Module being assigned to at least one access node. The method comprises a negotiation procedure comprising the steps of:
- either the End User Module sending a Call For Proposal to one or several Access Manager Modules for setting up a connection according to one or more connection characteristics;
- or an Access Manager Modules sending a connectivity offer to an End User Module, the connectivity offer comprising connection characteristics;
- and the End User Module and at least one Access Manager Module negotiating the characteristics of a connection by iteratively sending each other messages,
wherein, in the messages sent by the End User Module, connection characteristics required by the End User Module are expressed, and in the messages sent by the at least one Access Manager Module, connection characteristics offered by the at least one Access Manager Module are expressed.

Thus, each End User Device, EUD, integrates logically with an End User Module, EUM, that manages network access and interacts with Access Manager Modules, AMMs, to ensure best service connectivity. This is achieved when the user demands and the provider offering (taking into account options and constraints of the network) are adequately addressed and equally accounted for in a compromise that matches demands and offering as good as possible. This is achieved by using a mediation approach that tries to maximise the match. The outcome is a compromise between the demands of the user and the offering of the provider that depends on the prevalent conditions in the network. As a result, adaptive service access allows the End User Device to manage connectivity by the best means available taking into account constraining aspects such as user preferences, cost limitations, specific application requirements and/or network services, e.g., delay sensitive services such as Voice over IP, etc.

The End User Module is typically a software entity such as a program, process, library module etc. running on the end user device, but may also run on another hardware device. Thus, the End User Module manages the allocation of communication links to the end user devices on behalf of the end user device, regardless of where the software implementing End User Module is running physically. The EUM preferably comprises uses an Adaptive Logic Component, ALC, to manage best service connectivity via a multiplicity of constraints as mentioned above.

Similarly, the one or more Access Manager Modules are software entities that manage the allocation of communication links to the network access nodes, and may run on hardware located at the access nodes or at a network management facility, or at network nodes located in the access (or core) network between the access nodes and the network management facility or even in an end user device. The network management facility of a network operator preferably is a server or a server cluster located at a central location or distributed geographically over several locations. An Access Manager Module preferably comprises an Adaptive Access Component for negotiating with the Adaptive Logic Components of the end user devices.

In a preferred variant of the invention, either the End User Module or the at least one Access Manager Module iteratively adapt their required or offered connection characteristics until an agreement on connection characteristics is reached. Thus, the End User Module may successively relax its requirements, and/or the Access Manager Module may successively provide better offers or proposals.

The connection characteristics on which negotiation is based preferably comprise at least one quality of service parameter of the connection, and in particular at least one of a bandwidth, minimum bandwidth, maximum bandwidth, maximum delay jitter, maximum end-to-end delay, network type, cost schedule.

In a preferred embodiment of the invention, user policies expressing user preferences with regard to connection characteristics and/or performance characteristics of the end user device, are stored for use by the End user Module. Such performance characteristics may be related to, e.g., battery life, transmission and e.g. video display quality, in accordance with the computing power of the end user device. The user policies are flexible in that they may be adapted automatically or by the user in the course of operation of the end user device.

In another preferred embodiment of the invention, provider policies expressing provider preferences with regard to connection characteristics are stored for use by an Access Manager Module. Such provider policies may be related to, e.g. the different handling of users with different subscription types, the willingness to change connectivity contracts once they have been established, business rules allowing e.g. a tradeoff between service quality and number of users Other examples are:
- the adaptation of the pricing scheme according to the user's subscription type;
- the reservation of resources e.g. exclusively for premium users; and
- the treatment of users in case of congestion determining e.g. that non-premium users are dropped.

One preferred embodiment of the invention is directed to a method executed in a communication system, a further preferred embodiment of the invention to a method to be executed in a end user device, and a further preferred embodiment of the invention to a method implemented to support the operation of one or more access nodes.

The computer program for the for adaptive communication service access according to the invention is loadable into an internal memory of a digital computer, and comprises computer program code means to make, when said computer program code means is loaded in the computer, the computer execute one of the methods according to the invention. In a preferred embodiment of the invention, the computer program product comprises a computer readable medium, having the computer program or computer program code means recorded thereon.

Further preferred embodiments are evident from the dependent patent claims. Features of the method claims may be combined with features of the device claims and vice versa.

### BRIEF DESCRIPTION OF THE DRAWINGS

The subject matter of the invention will be explained in more detail in the following text with reference to preferred exemplary embodiments which are illustrated in the attached drawings, in which:
**Fig.1** shows a static diagram illustrating a network system that includes different types of end user devices communicating by means of different types of access networks;
**Fig. 2** shows a deployment diagram illustrating the logical integration points between the EUM and the EUD and between the AMM and the AN;
**Fig. 3** shows a flowchart illustrating the procedure embodied in the ALC to achieve adaptive service access;
**Fig. 4** shows a flowchart illustrating the procedure embodied in the AAC to negotiate a new connectivity offer;
**Fig. 5** shows an interaction diagram illustrating a method for the network provider to enforce a policy at one or several ANs or one or several EUDs;
**Fig. 6** shows a combination of deployment and interaction diagrams illustrating a network system and the communication that takes place among the various modules after a congestion at the UMTS AP as been encountered and hence the adaptive congestion recovery procedure has been run with the result that the EUD is handed over to the WLAN AP;
**Fig. 7** shows a combination of deployment and interaction diagrams illustrating a network system that makes use of the adaptive load balancing procedure in order to decrease the load at the WLAN AP; and
**Fig. 8** shows a combination of deployment and interaction diagrams illustrating a network system where an EUM that integrates with a vehicle uses two ALC components to separately manage adaptively the uplink and downlink channels.

### DETAILED DESCRIPTION OF PREFERRED EMBODIMENTS

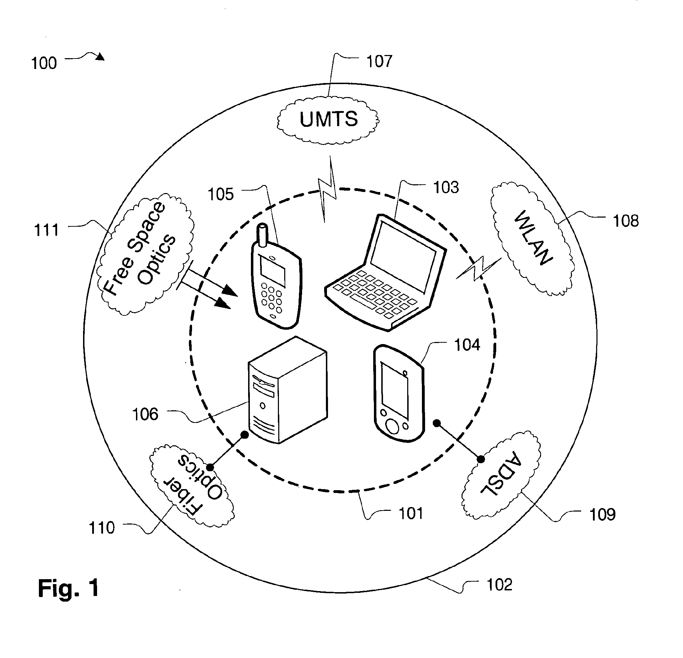

**Fig. 1** illustrates a typical network environment where a multitude of different end user devices, EUDs, 101 can make use of one or several access technologies 102. For convenience, only a few types of EUDs and access technologies are illustrated in the figure - Laptop 103, PDA 104, smart phone 105, Personal Computer 106, 3GPP UMTS 107, IEEE WLAN 802.11a/11b/11g 108, ADSL 109 (several standards exist for ADSL, e.g., ITU G.992.1), Fibre Optics 110 (standards from several standardization bodies exists on fibre optics, e.g., ITU-T G.652), Free Space Optics 111 (FSO; standards are emerging from ITU-T). Furthermore, each access network comprises one or more Access Nodes, ANs, of the same communication technology (e.g., IEEE WLAN Access Points populate the WLAN access network, several 3GPP UMTS Base Stations are part of the UMTS access network). Access Nodes typically are send/receive stations that provide a link to an access network. The access nodes provide a network interface to one single user device, so that the user can access further network services through the access node and the access network. The illustration of single ANs is omitted in the figure, for convenience.

The access networks 102 can belong to one or several different network providers while also the EUDs 101 are either restricted to use the access networks of one provider or they can use the access networks of different providers according to appropriate roaming subscriptions. For connecting to an access network, the end user might have to establish a subscription contract with a network operator. One aspect of the invention provides adaptive service access to an EUD that is equipped with one or several wireline and/or wireless communication technologies.

### EUM - End User Module

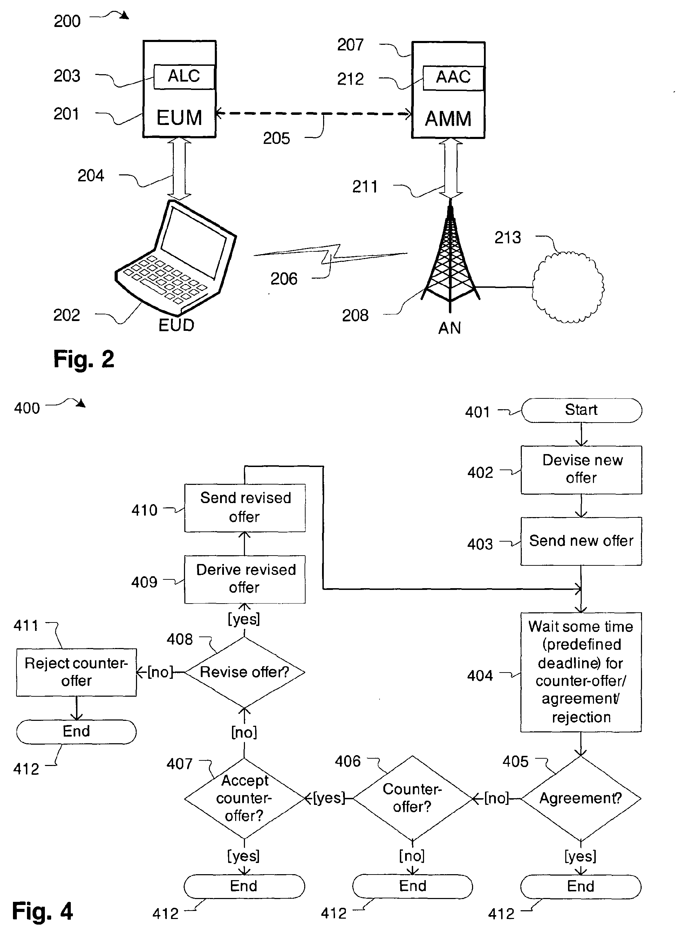

According to one aspect of the present invention, the End User Module, EUM, 201 (illustrated in **Fig. 2**) integrates logically (204) with the EUD, 202. Furthermore, the EUM comprises the Adaptive Logic Component, ALC, 203. In special cases, more than one ALC can be integrated into the EUM. The actual physical location where the EUM is installed, can be the EUD, an apparatus in the access or core network or any other networking node.

Furthermore, one or several instances or copes or implementations of the same EUM can be co-existent in this system whilst appropriate mechanisms might be used to synchronise the information base across all instances of the EUM (it can be that each instance comprises its own information base). A simple synchronisation mechanism may be realised by broadcasting changes to all existing instances. Such multiple instances may allow a failover in case one instance is out of operation, or one instance may serve as a proxy for another, remote instance.

The EUM 201 comprises (i) the means to retrieve and maintain up-to-date information on the status of each available network interface on the EUD (e.g., current speed, radio signal strength, channel quality), while status information can be retrieved, e.g., by an explicit query (polling) or by event subscription-notification, (ii) optionally, the means to retrieve and maintain up-to-date information on the status of other hardware components of the EUD (e.g., battery power status), being it through explicit querying or event subscription-notification, (iii) optionally, the means to obtain and maintain information on the EUD's properties (e.g., input/output facilities, performance of central processing unit (CPU)), (iv) optionally, the means to obtain and maintain information on the EUD's capabilities (e.g., supported audio/video codecs), (v) the means to set networking parameters that influence the networking behaviour of the EUD (e.g., determine which network interface and access node, AN, to use), (vi) optionally, the means to integrate with a Mobile IP (MIP specified by IETF) client or any other mechanism that provides seamless handover capabilities in a multi-technology network (e.g., from WLAN to UMTS while maintaining the sessions), (vii) optionally, the means to maintain a set of remote or local user preferences (e.g., preferred optimisation mode (e.g., cost versus speed)) and a set of remote or local policies (e.g., on prices for each network technology, roaming prices), and (viii) optionally, the means to obtain and/or maintain the conditions stated in the subscription contract.

Furthermore, the EUM 201 comprises the means to communicate 205 with the Access Manager Module, AMM, 207 on the basis of interaction protocols that could be implemented at various OSI (Open Systems Interconnection, ISO Standard 7498-1) layers and either be engineered from scratch or derived from other protocols, e.g., as an extension to existing OSI layer 2 (i.e., Data Link layer) protocols. The actual link 206 represents a *connection,* which connection can be a radio link, a TCP connection or anything else that allows the EUM and the AMM to communicate. The definition of the link depends on the OSI layer on which the communication protocols are implemented. Regardless of the communication protocol and layer, the essence is that the EUM and AMM are able to communicate and exchange information, i.e. they have signalling contact. The same holds for the links shown in the remaining figures.

### AMM - Access Manager Module

Another aspect of the invention is the Access Manager Module, AMM, 207 (illustrated in **Fig. 2**) that preferably is a software entity such as a program or a collection of programs or processes, and is logically associated (indicated by 211) with one Access Node, AN, 208. In special cases, the AMM 207 might also be logically associated with more than one AN, scaling up to even an entire access network. The actual physical location of the AMM can be an AN (e.g., embedded system approach) but also the EUD or any other networking device. In addition, the AMM comprises the Adaptive Access Component, AAC, 212. In special cases, more than one AAC can be integrated into the AMM. For example, there could be one instance of the AAC per connected EUM (i.e., per EUD that is connected with the AN).

Furthermore, one or several instances or copies of the same AMM can be co-existent in the system whilst appropriate mechanisms might be used to synchronise the information base that each instance contains (e.g., a simple mechanism could be realised by broadcasting changes to all existing instances), for the same reasons as given above for the EUM (failover, proxy functionality).

The AMM 207 comprises (i) the means to retrieve and maintain up-to-date information on the status of the AN 208 (e.g., current traffic load, number of associated EUDs, free capacity) and (ii) the means to communicate (205) with the EUM 201 on the basis of interaction protocols as described above for the EUM.

### ALC - Adaptive Logic Component

According to one aspect of the present invention, the ALC 203 is integrated into the EUM 201 provides adaptive service access by setting the networking parameters according to the outcome of the mediation process between the requirements of the end user, represented by the EUM, and the offering of the network provider represented by the involved AMMs.

This mediation process is conducted in co-operation between the EUM and one or several AMMs with the ultimate goal to determine the best connection parameters given the requirements of the end user, the offering of the network provider and the conditions of the transmission medium.

The requirements of the end user toward the provider are given by (i) the preferences of the end user that can be formulated as user policies, (ii) optionally, the quality demands of the applications and services that are running on the EUD (e.g., a certain service may require high data transmission speed), (iii) optionally, the status of the EUD (e.g., battery power level that can affect the selection of the transmission technology), (iv) the properties of the EUD (e.g., only WLAN and UMTS networking are supported), (v) optionally, the capabilities of the EUD (e.g., a set of specific codecs can only be used), (vi) optionally, any Quality of Experience, QoE, metrics that ideally reflect user-centric aspects (e.g., 3GPP TS 26.234) and (vii) optionally, the conditions stated in the subscription contract (e.g., costs for using certain networking technologies).

End user preferences or user policies may be e.g., minimising connection cost, maximising transfer cost, maximising battery life, or a weighted combination of such criteria.

The offering of the provider toward the end user is determined by (i) the properties of the provider network (e.g., diversity of network access technologies, packet-switched vs. circuit-switched network), (ii) optionally, the network status (e.g., distribution of traffic load, delay times), (iii) optionally, the capabilities of the network (e.g., handover of an end user device between two ANs and related quality and delay times, mobility support, e.g., through Mobile IP) and (iv) the provider policies, including business rules, that relate to the use of its infrastructure (e.g., end user X is not allowed to use the UMTS network, the maximum allowed transmission speed on WLAN is 500 KBit/s per user).

Furthermore, the conditions of the transmission medium (e.g., interference, signal strength decay) preferably are considered in the mediation process as its impact on the transmission quality can be essential. The EUM or the AMM or both may monitor the quality of the transmission continuously to consider it in their mediation process.

In a preferred embodiment of the invention, the offering of the provider is determined by means of a Proposal Generation Function, which takes as an input the determining parameters mentioned above, e.g. in the form of:
- constraints on what a proposal may contain (e.g., technical constraints, business constraints);
- provider policies (e.g. constraints with respect to what the actual user may be offered, how network load should be handled, business policies);
- network state, which may relate to the instantaneous state and/or historical state data, and/or predictions about the future state, optionally including reservations of network services.

The Proposal Generation Function may be an algorithmic procedure such as a known constraint based programming method, or another nonlinear programming method. It optimises cost functions contained in the policies subject to the various constraints and given the network state as parameters.

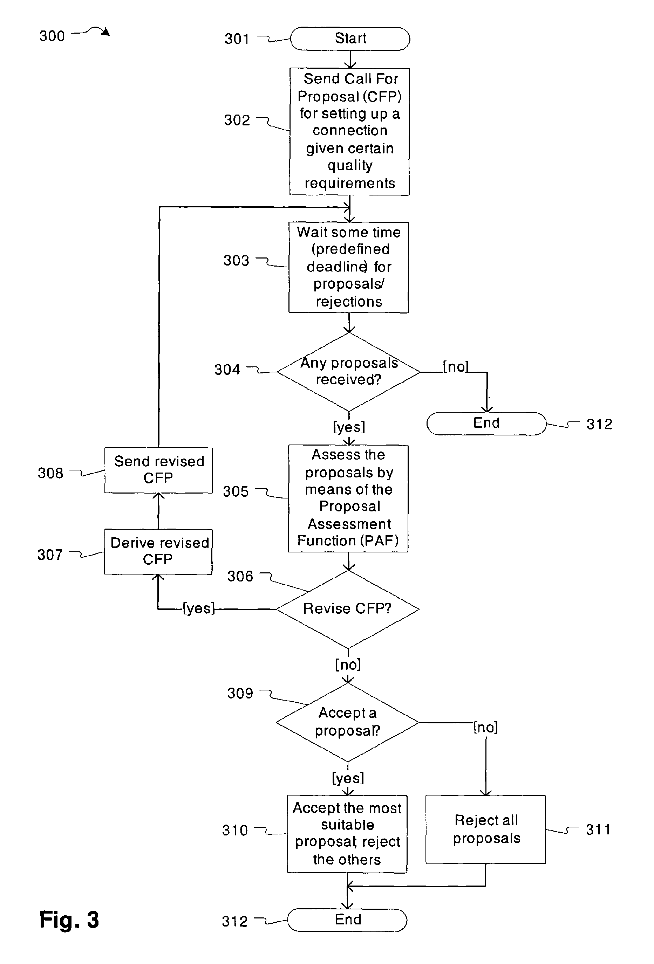

**Fig. 3** illustrates a typical flow diagram that shows an adaptive service access procedure according to one embodiment of the invention. This procedure is embodied in the ALC.

The execution of procedure 300 can be triggered by the EUM either (i) periodically (i.e., triggered by a timer), or (ii) upon connection quality degradation (e.g., decaying throughput due to higher interference or congestion at the AN), or (iii) upon changes in the perceived network environment (e.g., new AN is reachable, AN disappears, signal strength of active AN decays), or (iv) upon the launch or termination of an application or service and hence changing aggregated connectivity demands, or (v) upon the scheduling of a future execution of an application or service, or (vi) upon modification of the user preferences (e.g., data speed before price) which may influence the user policies, or (vii) upon changes in the status of the EUD (e.g., battery power status decreases), or (viii) upon changes in the set of provider policies, including business rules, being it by addition, removal or replacement of a policy, or (ix) upon explicit intervention by the user.

Before actually initiating procedure 300, the EUM may have to consider any connectivity mediation costs that could be incurred, e.g., financial cost factor imposed on negotiation, communication overhead influencing the data throughput.

The design of the procedure 300 is partially compliant with the standardized FIPA Iterated Contract Net protocol (http://www.fipa.org/specs/fipa00030/).

The steps shown in **Fig. 3** are now explained in detail:
301: Initial step of the procedure 300.
302: The EUM sends a Call For Proposal, CFP, to one or several AMMs for setting up a connection given certain quality requirements. The quality requirements shall also be called "connection characteristics". For sending a CFP to several AMMs, either 1:1 (unicast), 1:m (multicast) or 1:n (broadcast) communication is employed.

The active AMM (i.e., the AMM that is currently managing the EUM's adaptive service access) may also receive a CFP so that it can participate in the connectivity negotiation process. The following message exemplifies a CFP:
CFP: (set up connection, (min. bandwidth: 100 KBit/s, max. delay jitter: 50 ms))

Also media stream information might be included in the proposal (e.g., audio stream using codec X) with specific information on the encoding/decoding. This can further help the AMM in compiling an attractive proposal.

In addition, specific time schedule information regarding the start time and end time of the connection might be included (e.g., start-time: 2006-04-01, 12:00 UCT, end-time: 2006-04-01, 16:00 UCT). In special cases, where the connection needs to be periodically established, the recurrence of this event can also be stated in the proposal (e.g., every Monday). This allows the EUM to negotiate connectivity conditions in anticipation of the upcoming connectivity demand.

The validity of the CFP is restricted in time as stated in the CFP (e.g., the deadline for replying expires in 24 hours; thereafter, the offer is not valid anymore).

303: The EUM waits some time (predefined deadline) for proposals/rejections. When the deadline is reached, it continues with step 304. Any ANs that have not sent a proposal or rejection by then, are considered having rejected the CFP.

The following message exemplifies a proposal:
Proposal: (set up connection, (network: UMTS, min. bandwidth: 100 KBit/s, max. bandwidth: 120 KBit/s, max. delay jitter: 40 ms, max. end-to-end delay: 200 ms))

This sample proposal enumerates additional connection parameters than what was mentioned in the CFP. This allows the EUM to take also these parameters into consideration when assessing the goodness of the proposal (performed in step 305).

304: Decision on whether any proposals have been received. If this is the case, the EUM continues with step 305; otherwise, it enters step 312.

305: In this step, the proposals are assessed by means of the Proposal Assessment Function (PAF) that takes as input (i) the set of quality requirements stated in the original CFP, (ii) the received proposal (or the relevant parameters stated in the proposal), (iii) optionally, the user preferences (that can be formulated as user policies), (iv) optionally, the status of the EUD (e.g., battery power level that can affect the selection of the transmission technology), (v) optionally, the properties of the EUD, (vi) optionally, the capabilities of the EUD and (vii) optionally, any Quality of Experience, QoE, metrics, (vii) optionally, the set of provider policies including business rules.

For example, the PAF may comprise on the one hand a qualitative component that checks whether necessary conditions expressed in the different requirements and preferences are indeed met, and on the other hand a quantitative component that computes e.g. a sum of weighted differences between quantitative parameters as required and corresponding values in the proposal.

The output of the PAF for a certain proposal can be a number representing the goodness of the proposal. An example for the assessment of a proposal is given as follows:
The PAF is a function with a binary target value domain {0,1} where 0 indicates that the proposal does not satisfy the requirements and 1 indicates that the proposal is valid and acceptable.
   f(required min. bandwidth req_min_B, proposed min. bandwidth prop_min_B) := 1, if req_min_B <= prop_min_B; 0, otherwise
Assuming the CFP is:
   CFP: (set up connection, (min. bandwidth: 100 KBit/s))
Assuming the Proposal is:
   Proposal: (set up connection, (min. bandwidth: 120 KBit/s, max. delay jitter: 40 ms))
Applying the PAF to the proposal returns the value 1 since req_min_B (= 100 KBit/s) < prop_min_B (= 120 KBit/s).

306: Decision on whether the CFP needs to be revised and sent again to one or several ANs. Going through the process of a revision can make sense if no proposal is suitable enough according to the PAF. For example, if the assessment of all proposals by means of the above stated PAF function f issues 0 for every proposal, a revision of the CFP is triggered.

In case of a revision, the procedure 300 continues with step 307; otherwise, step 309 is entered.

It is important that the decision process exhibits a convergent behaviour, meaning that an endless negotiation with the continuous revision of CFPs is avoided. Suitable algorithms are known in the literature (e.g., publications from Prof. Tuomas Sandholm that can be found at, for example, http://www.cs.cmu.edu/~sandholm/; publications from Prof. Sarit Kraus that can be found at, for example, http://www.umiacs.umd.edu/~sarit/)

307: The EUM derives a revised CFP. Depending on the outcome of the assessment performed in step 305, the CFP is adjusted. By way of example, the CFPs are:
Original CFP: (set up connection, (min. bandwidth: 100 KBit/s))
Received proposal (only one proposal was received): (set up connection, (min. bandwidth: 70 KBit/s))

The EUM deliberates on the actual connectivity requirements and their constitution and concludes that other codecs can be used for coding/decoding the data with the effect that the minimal amount of required bandwidth can be reduced to 80 KBit/s. The EUM formulates thus this new, revised CFP:
Revised CFP: (set up connection, (min. bandwidth: 80 KBit/s))

This revised CFP is closer to the conditions offered in the proposal. Therefore, chances might be high that the AN can free some few additional resources and hence return an offer that satisfies the minimum bandwidth demand.

308: The revised CFP is sent to a set of AMMs that can be a subset of the original set of addressed AMMs.

309: Decision on whether a proposal is accepted. The EUM might decide to accept one of the received proposals (the most suitable one) depending on the outcome of the assessment performed in step 305.

If one proposal is accepted, the procedure continues in step 310; otherwise, step 311 is entered.

310: The EUM sends an accept-proposal message to the corresponding AMM. All other proposals that have been received are rejected by sending an appropriate message to the corresponding AMMs.

In the reject-proposal message, the EUM might indicate the reasons for rejection.

311: The EUM sends a reject-proposal message to all AMMs that have send a proposal. In the reject-proposal message, the EUM might indicate the reasons for rejection.

312: The procedure 300 ends.

### AAC - Adaptive Access Component

According to one aspect of the invention, the AAC 212 that is integrated into the AMM 207 provides the means to negotiate a new connectivity offer with an EUM.

This new offer may be based on an already existing connectivity contract that has previously been negotiated and established between an EUM (representing the end user) and the AMM (representing the network provider) in accordance with procedure 300.

The negotiation of the new connectivity offer is conducted with the objective to mediate between the requirements of the end user, represented by the EUM, and the offering of the network provider represented by the AMM.

The requirements of the end user toward the provider have already been shown in the context of the Adaptive Logic Component.

The offering of the provider toward the end user is determined by (i) the pending connectivity contract if existing, (ii) the properties of the provider network, (iii) optionally, the network status, (iv) optionally, the capabilities of the network and (v) the provider policies, including business rules, that relate to the use of its infrastructure.

Furthermore, the conditions of the transmission medium preferably are monitored and taken into account by the EUM or the AMM or both.

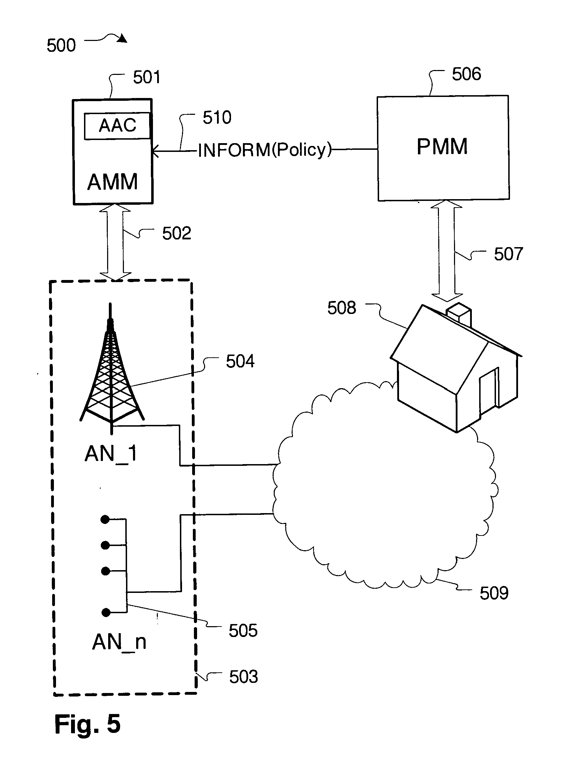

**Fig. 4** illustrates a typical flow diagram that shows a procedure for renegotiating the connectivity contract according to one embodiment of the invention. This procedure is embodied in the AAC.

In case of an already existing connectivity contract, the execution of procedure 400 can be triggered by the AMM (i) upon changed network conditions that might make it impossible for the AMM to comply with the pending connectivity contract (e.g., less bandwidth available due to additional users), (ii) upon changed network conditions that might make it possible to offer better connectivity conditions to the user (e.g., due to the migration of some users, resources are freed and can be allocated to remaining users), (iii) upon changed provider policies including business rules (e.g., modified restrictions with regard to the maximal bandwidth to be deployed per user), (iv) upon modification of the contract conditions (e.g., upgrade from "basic" user to premium user), (v) upon changes regarding the transmission conditions (e.g., increasing/decreasing radio interference) or (vi) upon explicit intervention by the network operator.

In the other case where no connectivity contract is already in place (and hence no connection), procedure 400 can be triggered by the AMM (i) upon changed network conditions that encourage the AMM to make an offer, (ii) upon changed provider policies including business rules (e.g., more users allowed at the AN), (iv) upon modification of the contract conditions (e.g., upgrade from "basic" user to premium user), (v) upon changes regarding the transmission conditions (e.g., increasing/decreasing radio interference) or (vi) upon explicit intervention by the network operator.

Before actually initiating procedure 400, the AMM might have to consider any costs that could be incurred (e.g., financial cost factor imposed on negotiation, communication overhead influencing the data throughput) for renegotiating the connectivity contract.

401: Initial step of the procedure 400.

402: The AMM devises a new connectivity offer on the basis of (i) the subscription conditions, (ii) optionally, if existing, the present connectivity contract, (iii) optionally, the current quality demands from the EUM, (iv) optionally, a description of the running services, (v) optionally, the user preferences (that can be formulated as user policies), (vi) optionally, the status of the EUD (e.g., battery power level), (vii) optionally, the properties of the EUD, (viii) optionally, the capabilities of the EUD, (ix) optionally, any Quality of Experience metrics and (x) optionally, any constraining provider policies including business rules.

Also media stream information might be included in the proposal with specific information on the encoding/decoding (e.g., the use of the audio codec X is recommended).

In addition, specific information regarding the start time and duration (or end time) of the offer might be included (e.g., start-time: 2006-04-01, 12:00 UCT, duration: 4 hours). In special cases, where connectivity should be supplied periodically under the offered conditions, the recurrence of this event can also be stated in the proposal (e.g., every Monday).

The validity of the offer is restricted in time as stated in the offer (e.g., the deadline for replying expires in 24 hours; thereafter, the offer is not valid anymore).

By way of example, the present connectivity contract and the new connectivity offer are:
- Present connectivity contract: (min. bandwidth: 300 KBit/s, max. jitter: 50 ms)
- New connectivity offer: (min. bandwidth: 150 KBit/s, max. jitter: 50 ms)
Hence, the new connectivity offer states that the minimal bandwidth is 150 KBit/s, compared to 300 KBit/s that were agreed upon in the present contract. The maximal delay jitter remains the same.

This new connectivity offer might be a consequence of an additional number of premium users - while the affected user is not a premium user - that have connected to the AN administered by this AMM.

403: The new connectivity offer is sent to the EUM. Optionally, the AMM might give the reasons for initiating a new negotiation round on connectivity.

404: The AMM waits some time (predefined deadline) for either a counter-offer, an agreement or a rejection from the EUM. When the deadline is reached, the AMM continues with step 405. No message, being it a counter-offer, an agreement or a rejection, is by default considered as an agreement. However, specific directions regarding such a case might be stated either (i) in the subscription contract, or (ii) in the current connectivity contract that might be in place, or (iii) in the new offer itself, or (iv) in any other statement about general terms and conditions.

The following message exemplifies a counter-offer:
Counter-offer: (min. bandwidth: 200 KBit/s, max. jitter: 50 ms)
So, compared to the offered 150 KBit/s, the EUM counters with an offer that states 200 KBit/s.

The following message exemplifies an agreement:
Agreed
The following message exemplifies a rejection:
Rejected
Additionally, the EUM might state that reasons for rejecting the offer.

405: Decision on whether the response from the EUM is an agreement (and not a counter-offer or a rejection or no response). If this is the case, the AMM and the EUM have established a new connectivity contract and the AMM continues with step 412; otherwise, it enters step 406.

406: Decision on whether the response from the EUM is a counter-offer (precondition of this state is that it is not an agreement). If this is the case, the AMM continues with step 407; otherwise, the response must be a rejection and the AMM enters step 412.

407: Decision on whether the AMM accepts the counter-offer. The decision might be based on an assessment of the counter-offer taking into consideration (i) the subscription conditions, (ii) optionally, if existing, the present connectivity contract, (iii) optionally, the current quality demands from the EUM, (iv) optionally, a description of the running services, (v) optionally, the user preferences (that can be formulated as user policies), (vi) optionally, the status of the EUD (e.g., battery power level), (vii) optionally, the properties of the EUD, (viii) optionally, the capabilities of the EUD, (ix) optionally, any Quality of Experience metrics and (x) optionally, any constraining provider policies including business rules.

If the AMM decides to accept the counter-offer, it continues with step 412. Eventually, the counter-offer will become the new connectivity contract.

If the AMM does not accept the counter-offer, it continues with step 408.

408: Decision on whether the last offer that the AMM has sent to the EUM shall be revised. If the AMM decides to revise the offer, it continues with step 409; otherwise, the AMM enters step 411.

409: The AMM derives a revised offer from the previous offers that have been sent and the counter-offers that have been received. Additional input for the development of a revised offer might be supplied by the assessment implied in step 407.

Exemplary offer, counter-offer and revised offer are:
Offer by AMM: (min. bandwidth: 150 KBit/s, max. jitter: 50 ms)
Counter-offer by EUM: (min. bandwidth: 200 KBit/s, max. jitter: 50 ms)
Revised offer by AMM: (min. bandwidth: 200 KBit/s, max. jitter: 80 ms)

The revised offer retains the minimal bandwidth rate (200 KBit/s), but increases the maximal delay jitter from 50 ms to 80 ms.

410: The AMM sends the revised offer the to EUM.

411: The AMM rejects the counter-offer made by the EUM. By default, this means that the status quo is retained, i.e., if a connectivity contract is already in place, it will remain valid. Special directions might be stated though either (i) in the subscription contract, or (ii) in the current connectivity contract that is in place, or (iii) in the new offer itself, or (iv) in any other statement about general terms and conditions.

An appropriate message is sent to the EUM indicating the AMM's decision. Exemplary content of such a message is:
Rejected
412: The procedure 400 ends.

Several turns of offering and counter-offering might be taken until the AMM and the EUM converge to an agreement and hence a new connectivity contract. These actions are an intrinsic part of the mediation process that embodies a core aspect of this invention.

### Provider Policies

One aspect of the invention provides the means (i) to inform a set of ANs about a provider policy that must be enacted, (ii) optionally, to validate a provider policy and check its consistency with other existing provider policies (including business rules) and (iii) optionally, to monitor the application of provider policies.

**Fig. 5** illustrates the process of the network operator 508 informing some ANs 503 to enact a certain policy. For convenience, the picture is simplified showing only two ANs (504 and 505) that represent the entire infrastructure of ANs controlled by the provider. In addition, only one AMM (501) is depicted. The figure shows an exemplary Policy Management Module, PMM, 506 that allows the network operator 508 to disseminate policies across a set of ANs 503.

In one embodiment of the invention, the PMM provides the means to define, remove and replace policies, being they targeted at, but not limited to, EUDs and/or ANs.

For the enactment of a provider policy at the AN 504 or a set of ANs, the PMM 506 sends the INFORM message 510 to the respective AMM 501 or group of AMMs, either by using 1:1 (unicast) or 1:m (multicast) or 1:n (broadcast) communication, requesting the AMM 501 to enact a certain policy.

In special cases, a provider policy can be negotiated between the AMM and the PMM.

In one embodiment of the invention, the AMM replies with an acknowledgement upon receiving the INFORM message 510 in order to signal proper receipt.

In one embodiment of the invention, different types of provider policy can be distinguished. For example, there can be (i) end user device policies that constrain the AMM's behaviour with respect to a specific EUD (e.g., a policy that prescribes to the AMM which EUDs it can serve and which not) or a set of end user devices operated by the same end user (e.g. a policy that describes the quality levels the end user has subscribed to), or (ii) user group policies that constrain the AMM's behaviour with respect to a specific group of users (e.g., premium users (and their demands) are preferentially treated).

In yet another embodiment of the invention, other categories of policy might be defined with different target domains (e.g., roaming policy that defines how to treat roaming end users).

### Embodiment #1

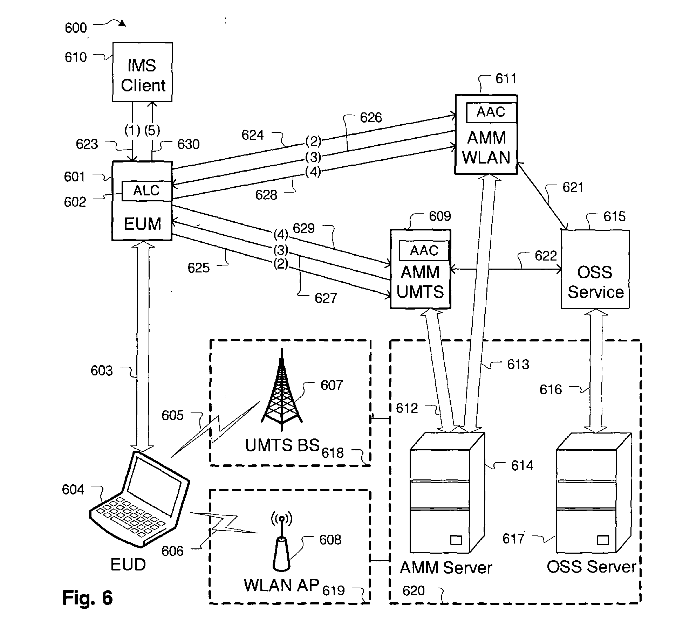

**Fig. 6** illustrates an embodiment of the innovation where the provider's network is only accessed by notebook computers that support WLAN according to the standards IEEE 802.11a/11b/11g (if not explicitly stated, pointers to the respective standard specifications are given in the references) and UMTS according to the standard 3GPP specifications.

Each notebook 604 (which is generally referred to as EUD in the following) includes (indicated by 603) an EUM module 601, being that it was pre-installed by the manufacturer or assembler or that the user downloaded the EUM module from the network provider's homepage and installed it herself. The EUM software comprises the ALC component 602 that manages the adaptive access to the WLAN and UMTS networks in an adaptive way. Furthermore, the EUM interfaces with the Mobile IP client (not shown in **Fig. 6** for convenience) in order to (i) obtain information on the network status such as the current data speed or packet delays as measured by the WLAN and UMTS network interfaces and (ii) set network parameters that influence the connectivity behaviour of the device such as the network interface to use (WLAN or UMTS) or that put a network interface into dormant mode. The communication links 605, 606 are radio links established between the EUD 604 and a UMTS Base Station 607 or a WLAN Access Point 608, respectively.

In addition, the EUD 604 is equipped with an IMS Client 610 that allows the end user to run IMS/SIP based services (IMS has been standardized by 3GPP while the original SIP protocol has been defined by IETF). This IMS Client 610 is integrated with the EUM 601 in order to (i) request information on the connectivity status (e.g., maximum data transfer speed that can be achieved at the moment; this can be relevant for the IMS client 610 to select the most appropriate codec, for instance), (ii) enforce certain Quality of Service (QoS) demands (e.g., in accordance with the IETF RFC (request for comment) 3312 that can be found, for example, at http://www.ietf.org/rfc/rfc3312.txt) and (iii) inform the EUM about quality requirements without the intention to strictly enforce them.

The network provider operates a WLAN access network 619 (again, according to the standards IEEE 802.11a/11b/11g) and an UMTS access network, according to the 3GPP standard of UTRAN 618 (several 3GPP specifications complement the UTRAN standard; the overall description is given in 3GPP TS 25.401 which can be found, for example, at http://www.3gpp.org/ftp/Specs/html-info/25401.htm). Furthermore, the WLAN access network is integrated with the 3G network as laid out by the 3GPP specification TS 23.234 (this specification can be found, for instance, at http://www.3gpp.org/ftp/Specs/html-info/23234.htm).

Each access network, WLAN and UMTS (i.e., UTRAN), comprises a multitude of access nodes (AN). The access networks are connected to the IP core network 620 that complies to the 3GPP Release 5 specifications. Furthermore, the operator supports Mobile IP so that seamless handover between WLAN and UMTS can be performed.

Optionally, the access networks 618 and 619 and also the core network 620 may support QoS in accordance to, for example, IEEE 802.11e for WLAN, 3GPP for UMTS and IETF DiffServ for the core network, respectively. Several RFCs make up the standard for DiffServ; a list of related RFCs is, for instance, given at http://www.ietf.org/html.charters/OLD/diffserv-charter.html.

For each AN, being it a WLAN access point 608 or an UMTS base station 607, exactly one AMM module, 611 and 609, respectively, is deployed (illustrated by 613 and 612, respectively) per AN on a server machine 614 that is deployed in the provider's IP core network 620. Each AMM is assigned to one particular AN, while no AMM modules are mutually interfering due to double assignments to the same AN. In particular, the server 614 that hosts the AMMs is connected to the operator's OSS (Operations Support System; by means of an example, a detailed description of the OSS/J can be found at http://www.ossj.org/) server 617 so that the AMMs can (i) obtain information (indicated by 621 and 622, respectively) on the status of the AN they are assigned to, by means of the OSS Service 615 and (ii) take influence on the behaviour of their AN with regard to connection treatment.

A typical example of the IMS Client 610 addressing connectivity requirements toward the EUM is given in **Fig. 6**. In chronological order, the messages 623 to 630 are exchanged:

623: The IMS Client 610 formulates the requirements in terms of minimum bandwidth. This message is addressed to the EUM 601. Exemplary content of the message is:
Requirement: min. bandwidth: 100 KBit/s
This means that the IMS Client 610 demands a minimum bandwidth rate of 100 KBit/s.

624 and 625: These two messages can be sent in parallel or in sequence. While message 624 is addressed to the WLAN AMM 611, the message 625 with equivalent content is sent to the UMTS AMM 609.

The messages contain a Call For Proposal (CFP) for setting up a connection that provides a given minimum bandwidth rate, including also maintaining the connection in case the EUM is already connected to one of the AMMs 609 or 611.

Exemplary content of the message is:
CFP: (set up connection, (min. bandwidth: 100 KBit/s))
Upon sending the CFP messages, the EUM expects each AMM to response either with a proposal or a refusal message. No message will be interpreted as refusal.

With regard to procedure 300, the messages 624 and 625 are sent in step 302.

626: The WLAN AMM 611 responds with a proposal indicated by message 626. Exemplary content of the proposal is:
Proposal: (set up connection, (min. bandwidth: 120 KBit/s)) This message content signals that the WLAN AMM 611 has committed itself to provide a minimum bandwidth of 120 KBit/s to the EUM 601.

With regard to procedure 300, the EUM 601 has been waiting for proposals and/or rejections in step 303.

627: Analogously to 626, the UMTS AMM 609 responds with the proposal 627. Exemplary content of this proposal is:
Proposal: (set up connection, (min. bandwidth: 80 KBit/s)) The content of the proposal message indicates that the AMM 609 is prepared to guarantee a minimum bandwidth rate of 80 KBit/s.

628: Given that the IMS Client 610 has requested a minimum bandwidth rate of 100 KBit/s (in message 623) and given that only the WLAN AMM 611 has sent a proposal (in message 626) satisfying this demand, the EUM 601 accepts this proposal by sending a corresponding message 628 to the AMM.

Exemplary content of the message is:
Accept proposal
The assessment of the two proposals corresponds to step 305 in procedure 300. As the EUM 601 has not the intention to revise the original CFP, the signalling of acceptance and rejection is performed according to step 310.

629: This message might be sent at the same time as message 628. As the EUM 601 has decided to accept the proposal from the WLAN AMM 611 it, in return, rejects the proposal from the UMTS AMM 609, indicated by message 629.

Exemplary content of the message is:
Reject proposal
630: The EUM 601 reports back to the IMS Client 610 that a minimum bandwidth rate of 120 KBit/s was guaranteed.

Exemplary content of the message is:
Acknowledgement: min. bandwidth: 120 KBit/s
It is then up to the IMS Client to decide what it does with the extra 20 KBit/s that it has been assured of (the IMS Client had asked only for 100 KBit/s). It might decide to select another codec or just proceed as intended.

The minimal bandwidth rate that is proposed by the AMMs 611 and 609 can be considered as (i) holding during a certain period of time (e.g., in the case of strict QoS guarantees), (ii) or only for the time being, i.e., the conditions could change over time and the EUM 601 had then to renegotiate connectivity quality.

### Embodiment #2

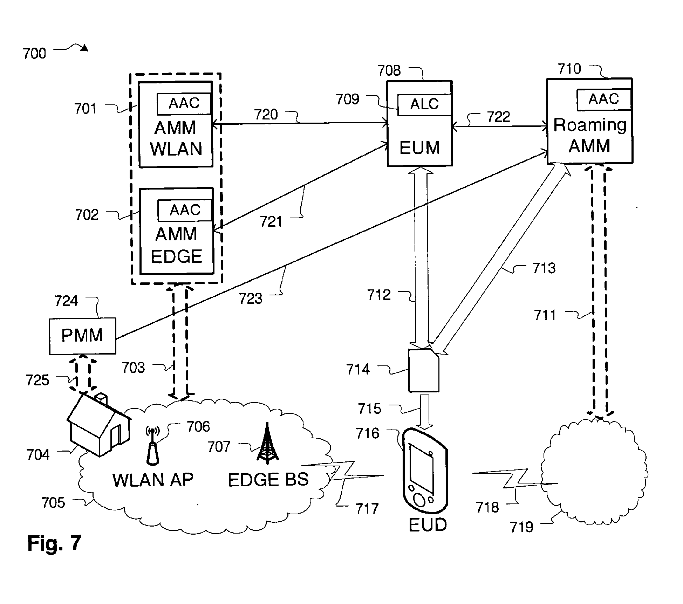

In another embodiment of the invention, only PDAs, smart phones, mobile phones and other small form factor devices are considered as EUDs. In **Fig. 7** which illustrates this solution, only one EUD 716 is depicted for convenience. The EUD 716 supports the radio technologies EDGE (Enhanced Data rates for Global Evolution) according to 3GPP (if not explicitly stated, pointers are given in the references) and IEEE WLAN 802.11a/11b/11g. The EUD 716 has signalling contact 717 with one or several ANs of the home operator's network 705, and signalling contact 718 with one or several ANs of the roaming parter's network 719.

The EUM 708 that comprises the ALC 709, is deployed on the Subscriber Identity Module, SIM, card 714 that may have been acquired directly from the home network operator 704 (i.e., the network operator to whom the end user is subscribed to). Additionally, the Roaming AMM 710 is present on the SIM card enabling the EUD 716 to take advantage of the adaptive connectivity features even when residing in a network of a roaming partner (indicated by 719) that has not deployed the Adaptive Communication Service Access architecture (according to the present invention) and in particular the AMM software modules.

Once the SIM card 714 is inserted (indicated by 715) into the EUD 716, the EUM 708 becomes operational and starts to manage the adaptive network access.

**Fig. 7** illustrates two networks: the network of the home operator as indicated by 705 and the network of a roaming partner indicated by 719.

As the home operator's network 705 experiences full support of Adaptive Communication Service Access, one AMM module logically integrates (indicated by 703) with each AN. For convenience, only the two ANs 706 and 707 are shown, the former being an IEEE WLAN 802.11a/11b/11g access point while the latter is a 3GPP EDGE base station. Each one of these ANs has its own AMM assigned, illustrated in the figure by the AMM WLAN 701 and the AMM EDGE 702, respectively.

Since the network 719 of the roaming partner does not provide Adaptive Communication Service Access, the Roaming AMM 710 that is - in this solution - deployed on the SIM card 714, represents the roaming partner in negotiations on connectivity. For this purpose, the Roaming AMM 710 maintains (i) provider policies (e.g., on pricing of roaming access) and (ii) optionally, status information on the various access networks belonging to the roaming partner.

The provider policies (including business rules) defined by the home network operator 704 can be pushed (indicated by 723) to the Roaming AMM 710 by means of the Policy Management Module, PMM, 724. Also other mechanisms are feasible such as polling by the Roaming AMM 710.

If no real-time (or approximately real-time) information on the status of each AN is available, rather static network information is instead employed. For instance, the Roaming AMM 710 is aware of the nominal bandwidth of each technology that is installed in the access network of the roaming partner and can thus provide information on nominal transfer speeds.

This kind of hybrid environment that is surrounding the EUD 716 does, however, not influence the usual way of working of the EUM 708 since it does only interact with the respective AMM modules (indicated by 720, 721 and 722) and not the hardware infrastructure directly. The entire mediation process for adaptive connectivity (detailed in procedure 300) can therefore be performed in the original manner without any need for modifying the procedure.

Finally, also no changes are required in the network 719 of the roaming partner.

If periodical information on the status of the access network can be gained from the roaming partner, the Roaming AMM 710 might be updated with this information.

### Embodiment #3

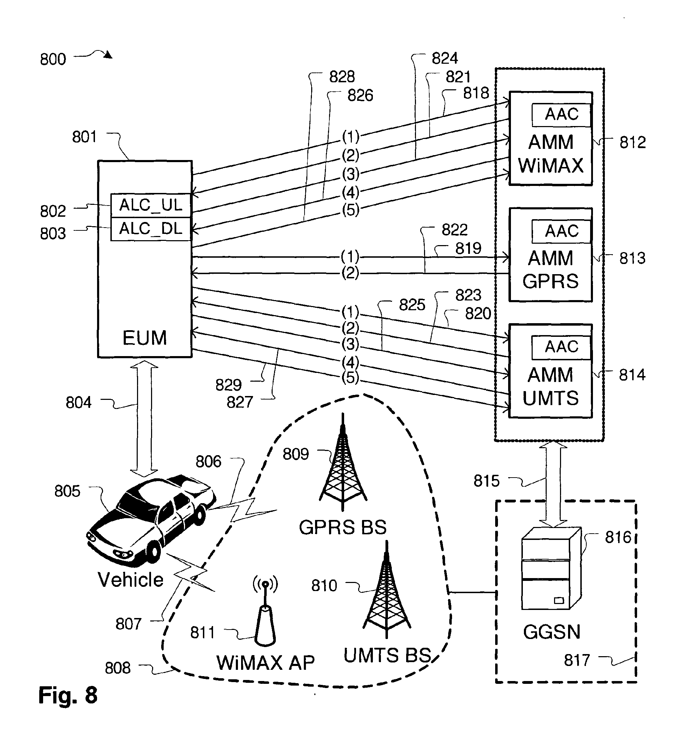

**Fig. 8** illustrates an embodiment of the invention where the focus is mainly on machine-to-machine communication (M2M). The depicted vehicle 805 has integrated (indicated by 804) the EUM 801 that is equipped with two Adaptive Logic Components, the ALC_UL 802 and the ALC_DL 803 that take care of the uplink and downlink channel, respectively (the EUM could be implemented as an embedded system). The vehicle 805 can thus reach, through communication connections 806, 807 several ANs of diverse transmission technologies. Accordingly, the uplink and downlink connections are both, individually established and managed, if they use different transmission technologies. Both channels can also be established over the same technology, while, in such a case, the ALC_DL 802 takes full charge of managing connectivity.

The vehicle 805 has the means to transmit data over three different wireless technologies: GPRS according to 3GPP (if not stated explicitly, appropriate pointers to the respective standard specifications are given in the references section), UMTS according to 3GPP and WiMAX according to IEEE 802.16.

On the provider's side, each AN is associated with an AMM module. For convenience, only three ANs - the GPRS base station 809, the UMTS base station 810 and the WiMAX access point 811 - are depicted in the **Fig. 8.** The respective AMM module of each AN - the AMM GPRS 812 controls the GPRS AN 809, AMM WiMAX controls the WiMAX AN 811 and the AMM UMTS 814 controls the UMTS AN 810 - is integrated (indicated by 815) into the GGSN node 816 that belongs to the IP core network 817.

The function of the ALC components, being it the ALC_UL 802 or the ALC_DL 803, is the adaptation of the connection (i) to the dynamically changing networking conditions (e.g., due to the vehicle's movements new ANs become reachable while others disappear; fluctuation of traffic load in the network and thus continuously changing connectivity quality), (ii) to the requirements of applications and services that communicate over the network and (iii) according to the user policies (e.g., derived from user preference settings) and provider policies (e.g., preferential order of network selection).

Communications between the vehicle 805 and the outer world comprises: navigation information and information on the state of the vehicle probed by various components (e.g., engine, gear, brakes, detected failures, vehicle handling). While the former might concern rather sparse information to be downloaded, the latter could comprise larger amounts of data that need to be transmitted reliably to the manufacturer of the vehicle.

Regarding **Fig. 8**, the vehicle 805 is initially connected only with the GPRS BS 809, using it as up- and downlink channel. This is sufficient as the vehicle 805 retrieves constantly but only few location data for the on board navigation system. Additionally, GPRS provides large coverage (which results in fewer handovers) and exhibits high robustness (i.e., in terms of connection breakdowns) - both advantages characteristics of this technology given the circumstances of the vehicle.

To exemplify the need for different connectivity conditions, it is assumed that the diagnosis system of the car continuously collects various kind of data that is eventually transmitted to the manufacturer for analysis. For the transmission part, the diagnosis system integrates with the EUM that is responsible for managing connectivity related aspects.

Furthermore, it is assumed that the amount of collected diagnosis data that waits for transmission is rather large (50+ MByte). Given the low bandwidth rate of GPRS, the EUM decides to defer the transmission until a fast upload link is available.

As the vehicle moves on, the WiMAX AP 811 and the UMTS BS 810 become available. Upon this event, the ALC_DL 802 starts to re-evaluate its connectivity options, indicated by the transactions 820 to 822.

It results from this evaluation that the ALC_UL 802 becomes operational and takes on responsibility for managing the uplink channel over the WiMAX AP 811 while the ALC_DL 802 takes care of the downlink channel that remains with GPRS BS 809 for the time being.

The typical transactions that are performed according to the procedure 300, are shown in the figure:

818, 819 and 820: The EUM 801 sends a Call For Proposal (CFP) for a connection to upload data to the AMM WiMAX 812, the AMM GPRS 813 and the AMM UMTS 814.

Exemplary content of the message is:
CFP: (set up connection for data upload, (channel: uplink, traffic-class: best-effort, min. bandwidth: 100 KBit/s, country radio coverage: high))
The requirements stated in the CFP are: only an uplink channel is needed (the downlink channel can remain with GPRS), the minimal traffic-class is best-effort, the minimal bandwidth is 100 KBit/s and radio coverage across the country should be high (to prevent too many handovers).

With regard to procedure 300, the CFP is sent off in step 302.

821: The AMM WiMAX 812 responds with a proposal with the exemplary content:
Proposal: (set up connection for data upload, (channel: uplink, traffic-class: best-effort, min. bandwidth: 350 KBit/s, country radio coverage: low))
With regard to procedure 300, the EUM 801 has been waiting for proposals and/or rejections in step 303.

822: The AMM GPRS 813 refused to make a proposal. Reasons might be that the AMM cannot comply with the required bandwidth rate. Exemplary response message is:
Refusal
823: The AMM UMTS 814 responds with a proposal with the exemplary content:
Proposal: (set up connection for data upload, (channel: uplink, traffic-class: conversational, min. bandwidth: 200 KBit/s, country radio coverage: high))
The traffic class conversational is defined by 3GPP.

Upon receipt of all response messages (or elapsing of the deadline), the EUM 801 singles out the proposals and starts to assess them. These steps are performed according to 303 - 305 in procedure 300.

As both proposals outbid the original CFP, the EUM 801 decides to revise its CFP according to steps 306 and 307 in procedure 300. This additional iteration that helps the EUM in its aim to achieve best connectivity is characteristic for the mediative aspect of this invention.

824 and 825: The EUM 801 sends the revised CFP to the AMM WiMAX 812 and the AMM UMTS 814. As the AMM GPRS 813 has rejected the first CFP, it is not considered in this second, refinement round anymore. Exemplary content of the revised CFP is:
Revised CFP: (set up connection for data upload, (channel: uplink, traffic-class: best-effort, min. bandwidth: 250 KBit/s, city radio coverage: high))
In this revised CFP the EUM 801 states slightly modified conditions: the minimal bandwidth has been increased to 250 KBit/s while the demand for high radio coverage has been limited to the city.

The sending of the revised CFP is compliant to step 308 in procedure 300.

826: The AMM WiMAX 812 responds with a proposal with the exemplary content:
Proposal: (set up connection for data upload, (channel: uplink, traffic-class: best-effort, min. bandwidth: 350 KBit/s, city radio coverage: high))

Compared to the first proposal (in step 821), the AMM WiMAX 812 can assure much higher radio coverage due to the fact that this requirement has been limited to the city area.

827: The AMM UMTS 814 responds with a proposal with the exemplary content:
Proposal: (set up connection for data upload, (channel: uplink, traffic-class: conversational, min. bandwidth: 250 KBit/s, city radio coverage: high))
Compared to the first proposal (in step 823), the AMM UMTS 814 has updated the minimal bandwidth rate, complying to all the requirements stated in the revised CFP.

In a new assessment of the proposals (again, according to step 305 in procedure 300), the EUM 801 concludes that the offering of the AMM WiMAX 812 is the best one and will therefore be accepted.

828: The EUM 801 sends an accept-proposal message to the AMM WiMAX 812. Exemplary content of this message is:
Accept proposal
This message is sent in compliance to step 310 of procedure 300.

829: The EUM 801 sends a reject-proposal message to the AMM UMTS 814. Exemplary content of this message is:
Reject proposal
After this cooperative effort to determine the best uplink connection given the user's requirements and the provider's offering, the ALC_UL 802 becomes operative by managing the uplink channel while the downlink channel remained under control of the ALC_DL 803.

Eventually, the vehicle 805 uses GPRS for downloading mainly navigation data while WiMAX is mainly used for fast uploading the gathered analysis data.

In another embodiment of the invention, several uplink and downlink channels can be used concurrently, each managed by an ALC. The advantage is that (i) data can be faster up- and downloaded (parallel use of up- and downlink channels) and (ii) redundant transmission channels serve as live failover.

While the invention has been described in present preferred embodiments of the invention, it is distinctly understood that the invention is not limited thereto, but may be otherwise variously embodied and practised within the scope of the claims.

### Acronyms

| | |
|---|---|
| AAC | Adaptive Access Component |
| ALC | Adaptive Logic Component |
| AMM | Access Manager Module |
| AN | Access Node |
| AP | Access Point |
| ASAM | Adaptive Service Access Management |
| BS | Base Station |
| CPU | Central Processing Unit |
| DL | Down-Link |
| EDGE | Enhanced Data rates for Global Evolution |
| ETSI | European Telecommunications Standards Institute |
| EUD | End User Device |
| EUM | End User Module |
| FIPA | Foundation for Intelligent Physical Agents |
| GERAN | GSM/EDGE Radio Access Network |
| GGSN | Gateway GPRS Support Node |
| GPRS | General Packet Radio Service |
| HSDPA | High-Speed Downlink Packet Access |
| IEEE | Institute of Electrical and Electronics Engineers |
| IP | Internet Protocol |
| ITU | International Telecommunication Union |
| M2M | Machine-to-Machine |
| NIC | Network Interface Card |
| OSI | Open Systems Interconnect |
| OSS | Operations Support System |
| PDA | Personal Digital Assistant |
| PMM | Policy Management Module |
| QoS | Quality of Service |
| SIM | GSM Subscriber Identity Module |
| SGSN | Serving GPRS Support Node |
| UL | Up-Link |
| UMTS | Universal Mobile Telecommunications System |
| UTRAN | Universal Terrestrial Radio Access Network |
| VoD | Video on Demand |
| VoIP | Voice over IP |
| WiMAX | Worldwide Interoperability for Microwave Access |
| WLAN | Wireless Local Area Network |
| 3GPP | 3rd Generation Partnership Project |

## Claims

1. A method for adaptive communication service access, implemented in a wireless communication system, the communication system comprising at least one end user device (103, 104, 105, 106; 202; 604; 716; 805), the end user device being configured to communicate by means of the wireless communication system with at least one of a plurality of access nodes (208; 504, 505; 607, 608; 706,707; 809, 810, 811),
**characterised in that** the end user device is associated with an End User Module (201; 601; 708; 801), the End User Module being assigned to the end user device and configured to manage the end user device's connection to the wireless communication system, and **in that** access nodes are associated with Access Manager Modules (207; 501; 609, 611; 701, 702, 710; 812, 813, 814), each Access Manager Module being assigned to at least one access node, and **in that** the method comprises a negotiation procedure comprising the steps of:
• either the End User Module sending (302; 624, 625; 818, 819, 820) a Call For Proposal to one or several Access Manager Modules for setting up a connection according to one or more connection characteristics;
• or an Access Manager Modules sending (402) a connectivity offer to an End User Module, the connectivity offer comprising connection characteristics;
• and the End User Module and at least one Access Manager Module negotiating the characteristics of a connection by iteratively sending each other messages, wherein, in the messages sent by the End User Module, connection characteristics required by the End User Module are expressed, and in the messages sent by the at least one Access Manager Module, connection characteristics offered by the at least one Access Manager Module are expressed.

2. The method of claim 1, comprising at least one of the steps of:
• the End User Module (201; 601; 708; 801) iteratively adapting its required connection characteristics; or
• the at least one Access Manager Module (207; 501; 609, 611; 701, 702, 710; 812, 813, 814) iteratively adapting its offered connection characteristics;
until an agreement on connection characteristics is reached.

3. The method of claim 1, the negotiation procedure comprising the steps of:
• the End User Module sending (302; 624, 625; 818, 819, 820) a Call For Proposal to several Access Manager Modules for setting up a connection according to one or more connection characteristics;
• at least one of the Access Manager Modules responding to this call by sending a proposal (626, 627; 821, 822, 823) to the End User Module, the proposal comprising at least one offered connection characteristic for the connection to be set up;
• the End User Module receiving one or more proposals;
• the End User Module assessing (305) the proposals by means of a Proposal Assessment Function which returns a measure representing the goodness of the proposal; and at least one of
• either: the End User Module accepting one of the proposals, the End User Module establishing a connectivity contract with the Access Manager Module from which the accepted proposal originated, and communicating over the access node assigned to said Access Manager Module;
• or: the End User Module not accepting one of the proposals, the End User Module sending a revised Call For Proposal (308; 824, 825) to the Access Manager Modules, and the method continuing with the above step of at least one of the Access Manager Modules responding.

4. The method of claim 3, wherein the Call For Proposal comprises at least one required connection characteristic for the connection to be set up.

5. The method of one of the preceding claims, wherein the connection characteristics comprise at least a quality of service parameter of the connection.

6. The method of claim 5, wherein the connection characteristics comprise at least one of a bandwidth, minimum bandwidth, maximum bandwidth, maximum delay jitter, maximum end-to-end delay, network type, time schedule, cost schedule.

7. The method of one of the preceding claims, comprising the step of
• storing, for use by the End User Module (201; 601; 708; 801), user policies, which user policies express user preferences with regard to connection characteristics and/or performance characteristics of the end user device;
• controlling the generation of required connection characteristics by the End User Module in accordance with the user policies.

8. The method of one of the preceding claims, comprising the step of
• storing, for use by an Access Manager Module (207; 501; 609, 611; 701, 702, 710; 812, 813, 814), provider policies, which provider policies express provider preferences with regard to connection characteristics;
• controlling the generation of offered connection characteristics by the Access Manager Module in accordance with the provider policies.

9. The method of one of the preceding claims, the negotiation procedure being executed separately for an uplink connection from the end user device (103; 202; 604; 716; 805) and a downlink connection to the end user device.

10. The method of one of the preceding claims, comprising, in order for allowing operation in a roaming partner network (719), the steps of
• implementing an Access Manager Module (710) in the end user device, with said Access Manager Module (710) being a roaming Access Manager Module (710) and representing the roaming partner network (719); and
• when negotiating the characteristics of a connection, the roaming Access Manager Module (710) negotiating on behalf of the roaming partner network (719).

11. A method for adaptive communication service access, implemented to operate in an end user device (103; 202; 604; 716; 805), the end user device (103; 202; 604; 716; 805) being configured to communicate by means of a wireless communication system with at least one of a plurality of access nodes (208; 504, 505; 607, 608; 706,707; 809, 810, 811),
**characterised in that** the end user device is associated with an End User Module (201; 601; 708; 801), the End User Module being assigned to the end user device and configured to manage the end user device's connection to the wireless communication system, and **in that** the access nodes are associated with Access Manager Modules (207; 501; 609, 611; 701, 702, 710; 812, 813, 814), each Access Manager Module being assigned to at least one access node, and **in that** the method comprises the steps of
• the End User Module sending (302; 624, 625; 818, 819, 820) a Call For Proposal to one or several Access Manager Modules for setting up a connection according to one or more connection characteristics;
• the End User Module receiving, in response to this call, one or more proposals (626, 627; 821, 822, 823); the proposals comprising at least one offered connection characteristic for the connection to be set up;
• the End User Module assessing (305) the proposals by means of a Proposal Assessment Function; and at least one of
• either: the End User Module accepting one of the proposals, the End User Module establishing a connectivity contract with the Access Manager Module from which the accepted proposal originated, and communicating with the access node assigned to said Access Manager Module;
• or: the End User Module not accepting one of the proposals, the End User Module sending a revised Call For Proposal (308; 824, 825) to the Access Manager Modules, and the method continuing with the above step of the End User Module receiving one or more proposals.

12. A computer program for adaptive communication service access and for operating in an end user device (103; 202; 604; 716; 805), the end user device (103; 202; 604; 716; 805) being configured to communicate by means of a wireless communication system with at least one of a plurality of access nodes (208; 504, 505; 607, 608; 706,707; 809, 810, 811), which computer program is loadable and executable on a data processing unit and which computer program, when being executed, performs the steps of claim 11.

13. A method for adaptive communication service access, implemented to support the operation of one or more access nodes (208; 504, 505; 607, 608; 706,707; 809, 810, 811) of a wireless communication system, the access nodes being configured to communicate by means of the wireless communication system with at least one end user device (103; 202; 604; 716; 805);
**characterised in that** the end user device is associated with an End User Module (201; 601; 708; 801), the End User Module being assigned to the end user device and configured to manage the end user device's connection to the wireless communication system, and **in that** the access nodes are associated with Access Manager Modules (207; 501; 609, 611; 701, 702, 710; 812, 813, 814), each Access Manager Module being assigned to at least one access node, and **in that** the method comprises the steps of
• an Access Manager Module sending (403) an offer to an End User Module, the offer specifying communication characteristics for an existing connectivity contract or for a potential new connectivity contract;
• the Access Manager Modules, in response to the offer, receiving (404) a message from the End User Module, the message specifying either agreement, rejection of the offer, or a counter-offer specifying required communication characteristics;
• in the case of the message specifying a counter-offer, the Access Manager Module either accepting the counter offer, or rejecting the counter-offer, or generating (409) a revised offer and sending (410) the revised offer to the End User Module and continuing with the previous step.

14. A computer program for adaptive communication service access, supporting the operation of one or more access nodes (208; 504, 505; 607, 608; 706,707; 809, 810, 811) of a wireless communication system, the access nodes being configured to communicate by means of the wireless communication system with at least one end user device (103; 202; 604; 716; 805); the computer program being loadable and executable on a data processing unit and which computer program, when being executed, performs the steps of claim 13.

15. A system for adaptive communication service access, configured to operate in a wireless communication system, the communication system comprising at least one end user device (103, 104, 105, 106; 202; 604; 716; 805), the end user device being configured to communicate by means of the wireless communication system with at least one of a plurality of access nodes (208; 504, 505; 607, 608; 706,707; 809, 810, 811),
**characterised in that** the end user device is associated with an End User Module (201; 601; 708; 801), the End User Module being assigned to the end user device and configured to manage the end user device's connection to the wireless communication system, and **in that** access nodes are associated with Access Manager Modules (207; 501; 609, 611; 701, 702, 710; 812, 813, 814), each Access Manager Module being assigned to at least one access node, and **in that** the system comprises means for negotiating a connectivity contract for the end user device, said means comprising:
• an Adaptive Logic Component (203; 602; 709; 802; 803) associated with an End User Module, the Adaptive Logic Component being configured to generate a Call For Proposal sent by the End User Module to one or several Access Manager Modules for setting up a connection according to one or more connection characteristics;
• at least one Adaptive Access Component (203) associated with an Access Manager Module, the Adaptive Access Components being configured to generate a connectivity offer sent by the Access Manager Module to an End User Module, the connectivity offer comprising connection characteristics;
• the End User Module and the Access Manager Module each comprising a negotiation mechanism, the two negotiation mechanisms being configured to iteratively send each other messages, wherein, in the messages sent by the End User Module, connection characteristics required by the End User Module are expressed, and in the messages sent by the at least one Access Manager Module, connection characteristics offered by the at least one Access Manager Module are expressed.
